# EUROPEAN PATENT APPLICATION

(11) **EP 1 125 612 A2**
(43) Date of publication of application: **22.08.2001**
(21) Application number: 01102612.7
(22) Date of filing: 06.02.2001
(51) Int. Cl.: A63F 13/10

(54) **Method of controlling game by receiving instructions in artificial language**

(30) Priority: 07.02.2000 JP 2000029298; 05.02.2001 JP 2001027969
(71) Applicant: Sony Computer Entertainment Inc., Tokyo 107-0052 (JP)
(72) Inventor: Mizuno, Kazumi, c/o Yuugengaisha Windream, Tokyo 107-0052 (JP); Koike, Akira, c/o Sony Computer Entertainment Inc., Tokyo 107-0052 (JP)
(74) Representative: MÜLLER & HOFFMANN Patentanwälte

(57) **Abstract**

There is provided a method by which a player can have a virtual conversation with a character by means of an artificial language whose grammar is defined such that a word and a series of words express a certain meaning. According to this method, a new means for communication between a player and a character is provided through an entertainment apparatus.

## Description

This application claims a priority based on Japanese Patent Application Nos. 2000-29298 and 2001-27969 filed on February 7, 2000, and February 5, 2001 respectively, the entire contents of which are incorporated herein by reference for all purposes.

### BACKGROUND OF THE INVENTION

### TECHNICAL FIELD OF THE INVENTION

The present invention relates to controlling for proceeding with a game in an entertainment apparatus, particularly to a technical field for virtual conversation between a player and a character in a game.

### DESCRIPTION OF RELATED ART

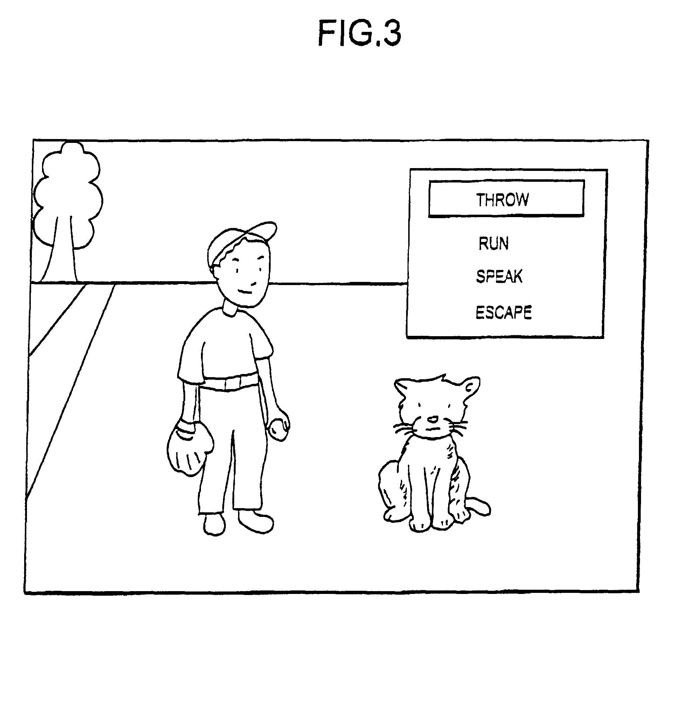

Many role playing games, which form one field of a game carried out in an entertainment apparatus, employ a manner that a player joins a game as one of characters in a story of the game. This type of the games requires an operation of a player through an entertainment apparatus to have a conversation virtually with other characters. This operation is performed conventionally by a player selecting among choices displayed on a screen of a television receiver connected to an entertainment apparatus as shown in Fig. 3. That is, a player should select one displayed choice of actions or conversations to be carried out by a character to designate it by operating a controller connected to an entertainment apparatus. This operation means input of an instruction corresponding to the choice into an entertainment apparatus. Then, the character performs an action in response to the instruction, and the story proceeds.

### SUMMARY OF THE INVENTION

According to such input method, the player can perform only actions displayed as choices. Further, a sense of togetherness does not develop between the player and the character that he or she is operating, since the information is transmitted by the selection of predetermined choices. At the same time, it seems that the communication with other characters is indirect, so that a player becomes less interested in the game. Moreover, the choices should be displayed within a limited area on a screen, and therefore, it is difficult to increase the number of choices. As a result the story of the game becomes less diverse.

The present invention has been made in order to solve the above problems and the object of the present invention is to provide a new communication means capable of having a free conversation with characters in a game to proceed with a game.

In order to solve the above problems, the present invention provides a technical method for having a virtual conversation between a player and a character by means of an artificial language whose grammar is defined such that a word and an arrangement of the words express a certain meaning. The smallest element constituting a word corresponds to an operation button of a controller. A player operates the buttons so that the player can input his or her own lines into an entertainment apparatus.

### BRIEF DESCRIPTION OF THE DRAWINGS

Fig. 1 shows a scene of a game program for describing the present invention.

Fig. 2 illustrates an embodiment of a main body and a controller of an entertainment apparatus used in the present invention.

Fig. 3 shows a scene of a TV game program for describing a conventional method for controlling to proceed with a game.

Fig. 4 is a flow chart showing a process of interpreting inputted sentences.

Fig. 5 is a flow chart showing a process of interpreting inputted sentences.

Fig. 6 is a flow chart showing a process of interpreting inputted sentences.

### DETAILED DESCRIPTION OF BEST MODE OF THE INVENTION

An embodiment of the present invention is described. In this embodiment, the present invention is applied to a role playing game. In this role playing game, a story of the game proceeds by a conversation and the like between a character operated by a player and other characters. An artificial language is used for the conversation. The artificial language is here defined to be formed by a combination of a few syllables (for example, 5 syllables). This definition can make a syllable correspond to, for example, an operation button provided in a controller, so that the input of the language may become easier.

First, the artificial language used in this embodiment will be described. The present invention is, however, not limited to the following artificial language. In the following description, the terms such as noun, verb, and object are used as a matter of convenience for explaining the language.

It is assumed that the language comprises 5 syllables of "ba", "ri", "mu", "do", and "dyu". The word of the language is defined by a combination of 4 syllables of the above "ba", "ri", "mu" , and "do". For example, it is assumed that the words "ri-mu" and "ri-ba-ri" of the language mean "price" and "10", respectively. The length of a word is defined to be within 6 syllables for the purpose of simplification.

In the language, a series of 3 words basically forms a sentence. That is, one sentence is broken down into 3 words. The broken-down words are referred to, from the head, as "front word", "middle word", and "rear word". Thus, dividing a sentence into 3 parts basically can make the interpretation of the sentence easy.

The "front word" is a noun as a subject of a sentence. The "middle word" is a transitive verb indicating an action of the "front word", or a word indicating a logical relation between the "front word" and the "rear word" (hereinafter referred to as "logical relative"), for example, a word meaning that "(front word) is (rear word)" or that "(front word) is not (rear word)". The "rear word" is an object when the "middle word" is a transitive verb, or a complement when the "middle word" is a logical relative.

A sentence including a verb that does not need an object (such as "I sleep") is expressed in a manner of "I, do, sleep" in which the "rear word" is a verb and the "middle word" is a logical relative. Thus, the logical relative is general and can also express existence and the like. That is, "I, do, forest" can express a meaning of "I am in (will go to) a forest".

The "middle word", namely, a transitive verb and a logical relative of the language comprise fixed 4 syllables length words starting from "do-do", for example, "do-do-mu-ri" that means "look (rear word)", and "do-do-ri-ba" that means "(front word) is (rear word)". "Do-do" should not be included in the words indicating the other part of sentence in order to break down a sentence into "front word", "middle word", and "rear word".

In the case that the "middle word" or the "rear word" is a verb, the sentence indicates the intention of the speaker when the "front word" is a word denoting a player, and the sentence indicates the request and/or order to a conversation companion when the "front word" is a word denoting the companion.

An interrogative sentence is formed by adding a syllable "dyu" to the last part of the sentence that is formed in accordance with the grammar.

This language is not so strict since sentences are formed by and in accordance with limited words and rules of grammar. For instance, a sentence "A is 3" can be interpreted as "A is 3 years old", "there are three As", or "I need three pieces", depending on the situation.

A sentence having particular meaning such as an interjection and a response may not follow the rule of grammar "front word", "middle word", and "rear word". For example, "ba-ba-ba" can mean allowance and "mu-mu-mu" can mean negation.

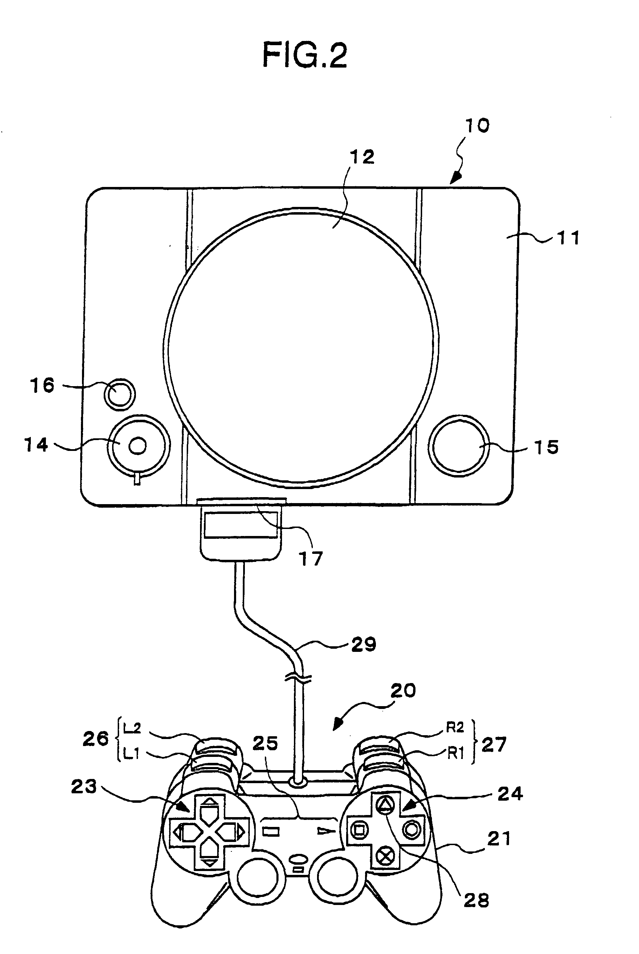

Secondly, an entertainment apparatus to which the present invention is applicable will be described by referring to Fig. 2. The entertainment apparatus is a home information-processing unit for enjoying games, music, images, and so on. The hardware equipment to which the present invention *is* applicable is, of course, not limited to the entertainment apparatus, as long as it is a program-executing apparatus controllable by a program.

As shown in Fig. 2, an entertainment apparatus 10 comprises a main body 11 and each portion provided on the main body 11. There is a portion provided at the upper center of the main body 11 for loading an optical disc (such as CD-ROM) to supply a game program, and the portion is covered with a CD cover 12. A medium for supplying a game program is not limited to an optical disc, and the way of supplying may be a semiconductor device or a communication line.

A power switch 14, a cover operation switch 15, and a reset switch 16 are provided other than the CD cover 12 at the top surface of the main body 11. A connector 17 is provided on the front side of the main body 11. The connector 17 is connected to a controller 20 via an exclusive cable 29. The plural connectors 17 are provided so that each of them can be connected to the controller 20, respectively.

On the rear side of the main body 11, an external connection unit, (not shown) is provided to be connected to monitor equipment such as a television receiver, which is an image and sound apparatus, via a predetermined cable. In operating the entertainment apparatus, images are displayed on the image apparatus and sound is outputted from the sound apparatus.

The controller 20 comprises a main body 21 that is also used as a grip, and a group of operation buttons provided thereon. Groups of operation buttons 23 to 27 are provided at the top right and left positions, the top center position, and the front right and left positions of the main body 21, respectively.

The group of operation buttons 23 at the top left position of the main body 21 of the controller includes four operation buttons provided in a cross and which correspond to up-down and left-right arrows. The group of operation buttons 24 provided at the top right position includes four buttons provided in a cross and which are marked with A, O, ×, and □ . The group of operation buttons 25 at the top center position comprises a plurality of operation buttons for instructing start or interruption of a game.

The two groups of operation buttons 26 and 27 provided at the front right and left positions of the main body 21 of the controller each comprise two operation buttons L1, L2, and R1, R2 at left and right. The buttons L1, L2, and R1, R2 are located so that the right and left index and middle fingers of a player mainly can operate the buttons when the player grips the main body 21.

To carry out a game program recorded in an optical disc, a player press a CD cover operation switch 15 of the main body 10 of an entertainment apparatus to open the CD cover 12 so as to load the optical disc containing a game program recorded in a predetermined location. After closing the CD cover 12, the power switch 14 is pressed to turn on the main body 10 of an entertainment apparatus, and then a program recorded in the optical disc is read into the entertainment apparatus 10. The entertainment apparatus 10 starts a game according to the read program. The information from the entertainment apparatus 10 is outputted by means of images and sound from monitor equipment connected to the outside. Instructions from a player are received through the operation buttons of the controller 20.

Next, a method for proceeding with a game by means of the language will be described. It is assumed that a player knows in advance the grammar and words of the artificial language used in the game, That is, explanation of grammar and a list of words are shown in a manual of the game, for example.

In this embodiment, syllables "ba", "ri", "mu", and "do" are respectively assigned to four operation buttons L1, L2, R1, and R2 provided at the front surface of the main body 21 of the controller. A syllable "dyu" is assigned to an operational button indicated by a reference number 28 (an operation button with a mark Δ) in the operation button group 24 on the top surface of the main body 21. A player can input a sentence by operating the above operation buttons.

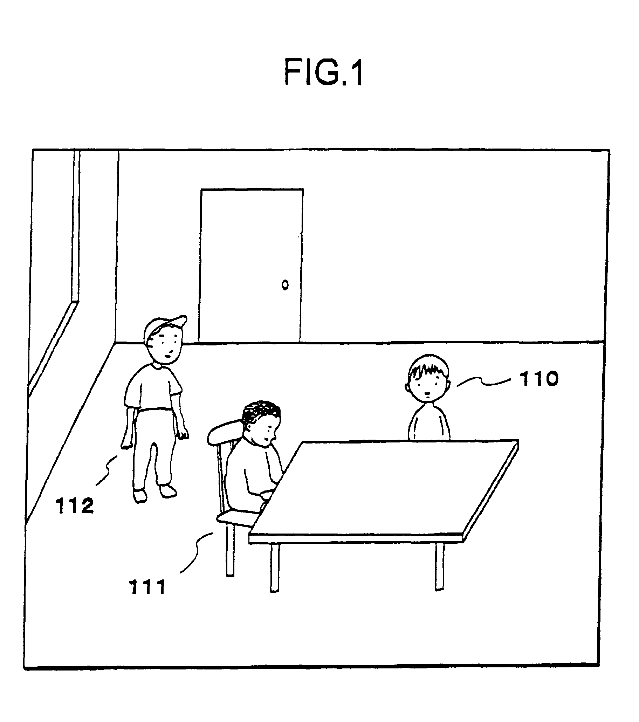

Fig. 1 shows a scene in a game being played. In this scene, three characters 110, 111, and, 112 appear. The characters are named "BAMU", "RIMURI", and "MUBARI", respectively. It is assumed that a player joins the game as "BAMU", which is the character 110 located on the right side of the screen 1.

When a player, namely, "BAMU" wants to say to "RIMURI", "look at the outside", the player inputs "ri-mu-ri-do-do-mu-ri-ba-ba-ri" by a button operation (L2, R1, L2, R2, R2, R1, L2, L1, L1, L2). It is defined here that "ri-mu-ri" denotes a name; "do-do-mu-ri" denotes a verb that means "look at (rear word)"; and "ba-ba-ri" denotes a word that means "outside". In this embodiment, the sentence expresses a request and/or order since a speaker is different from the "front word".

To make "BAMU" stand up from the chair, a player should inputs "ba-mu-do-do-ri-ba-ba-ri-ba" by operating the buttons. It is defined here that "ba-mu" denotes a name; "do-do-ri-ba" denotes a logical relative that means "(front word) is (rear word)"; and "ba-ri-ba" denotes a word that means "stand up". In this embodiment, the sentence expresses an intention of the player since the speaker is identical to the "front word".

When "BAMU" wants to speak, "How are you?" to "MUBARI", "mu-ba-ri-do-do-ri-ba-mu-do-ri-ba-dyu" should be inputted by operating the buttons. It is defined here that "mu-ba-ri" denotes a name; "do-do-ri-ba" denotes a logical relative that means "(front word) is (rear word)"; and "mu-do-ri-ba" denotes a word that means "fine". This sentence expresses an interrogative sentence since "dyu" is added at the last.

It is preferable to arrange such that, for example, inputting "ΔΔ" can clear the inputted sentence in case that the player incorrectly operates buttons.

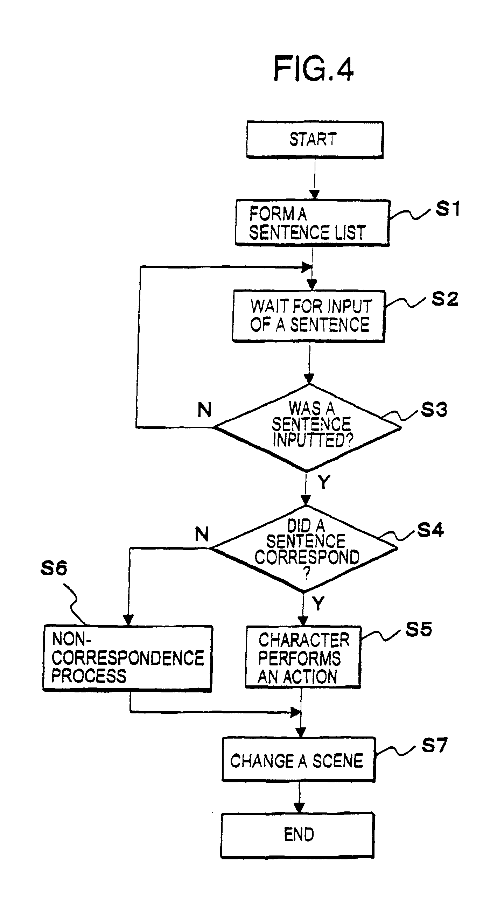

Next, means by which an entertainment apparatus 10 interprets a sentence (lines) inputted by the player is described as follows, referring to a flow chart shown in Fig. 4.

The entertainment apparatus 10 recognizes the start of the input of a new sentence upon detecting the input through the operation buttons by a player, after a predetermined time period has passed since the preceding sentence had been inputted or after the lines of a conversation companion have been completed. The entertainment apparatus 10 recognizes the following cases as the completion of the input of a sentence, and starts interpretation of the sentence:
- when no operation of the buttons has been performed for a predetermined time period;
- when the input through the operation buttons has been performed 17 times;
- when ΔΔ was inputted (In this case, interpretation of the sentence will not be performed); and
- when the input was out of the standard (In this case, interpretation of the sentence will not be performed).

There would be various ways of interpreting an inputted sentence. First of all, a complete sentence correspondence way is described as the first processing way, referring to a flow chart shown in Fig. 4.

In developing a role playing game, sentences possible to be possibly inputted by a player are assumed every scene. The assumed sentences are registered in, for example, a data table for every scene so that they can be referred to by a program. Information concerning actions of characters corresponding to the inputted sentences is also registered in the data table.

In carrying out a role playing game, the data table is referred to when a player inputs a sentence, and then, CPU 51 makes the character perform an action corresponding to the inputted sentence to proceed with the game.

Specifically, when a certain scene is set in a game, the entertainment apparatus 10 refers to the data table at the scene to form a sentence list comprising a group of sentences assumed to be inputted and character response information corresponding to the sentences (S1). Then, the apparatus waits for the player to input a sentence (S2).

In this flow chart, it is arranged to continue to wait for the input of a sentence. It may be arranged, however, to carry out no input process and to change the scene when no input has been performed for a predetermined time period.

Upon the input of a sentence by the player, the entertainment apparatus 10 refers to the sentence list to determine whether the inputted sentence is included in the list or not (S4). This process may be carried out after the input of a sentence is completed as shown in the flow chart, or every input of one letter.

As a result, when the list has a sentence identical to the inputted sentence, the action related to the inputted sentence is performed by the character (S5) to proceed to the next scene (S6).

On the other hand, when the list does not have a sentence identical to the inputted sentence, the inputted sentence is considered to be obscure and non-correspondence process is carried out (S6) so as to proceed to the next scene. In this case, it may be arranged to return to the condition of waiting for the re-input of the sentence (S2) without changing the scene. In the case that the reference to the sentence list is performed every input of one letter, it may be arranged to carry out the non-correspondence process after confirming that there is no corresponding sentence in the list.

In the non-correspondence process (S6), the character is made not to respond to the inputted sentence or a player is informed that the sentence is obscure, depending on the scene.

It may also be arranged that a story be set such that the language is used when a response related to the inputted sentence is performed by means of lines of another character. Then, a player can communicate with the entertainment apparatus 10 by means of the language. The lines can be expressed by sound output and/or image display.

As described above, the first processing way of interpreting inputted sentences is for recognizing the contents only when the sentence inputted by a player completely corresponds to the sentence assumed in advance. This way is characterized in that the processing time for the reference and the related response is short, but a number of sentences should be prepared in advance. Especially when a sentence contains figures indicating such as the number of items, the sentences should be prepared as many as the number of different figures.

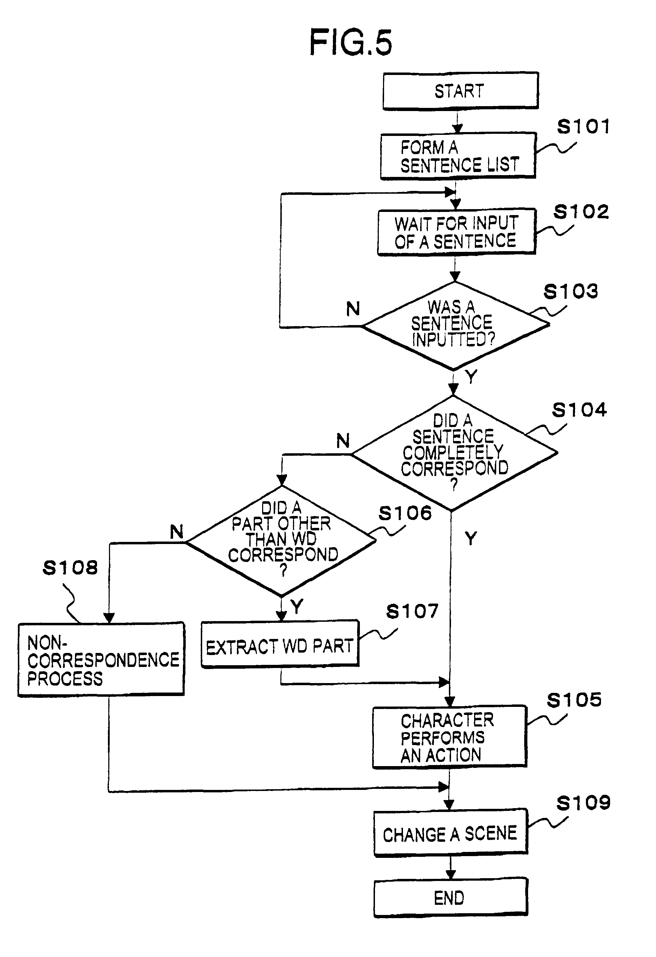

To solve this problem, the second processing way of interpreting the inputted sentences is described, referring to a flow chart shown in Fig. 5. The first and second processing ways can be selectively employed in accordance with the scene.

As with the first processing way, the sentence a player is assumed to input is processed every scene by means of, for example, a data table in the second processing way.

Here, the sentences recorded in the data table may include a particular mark called "wild card (WD)". The wild card is used as any one of the "front word", "middle word", or "rear word" in a sentence.

When a certain scene in a game proceeding is set, the entertainment apparatus 10 forms a sentence list in accordance with the scene (S101), and waits for the input by the player (S202).

When the player inputs a sentence, the entertainment apparatus 10 refers to the sentence list. There are sentences, which contain and do not contain the wild card, registered in the sentence list. The entertainment apparatus 10 first retrieves the sentence completely corresponding to the inputted sentence among the sentences without the wild card (S104). When there exists any sentence completely corresponding to the inputted sentence in the sentence list, the action related to the inputted sentence would be performed by a character (S105). In the case of no such corresponding sentence, the apparatus searches a sentence, whose part other than the wild card corresponds with the inputted sentence, among the sentences containing the wild card therein in the sentence list (S106).

When the corresponding sentence can be found, a word corresponding to the location of the wild card is picked up from the inputted sentence (S107), and then, a character is made to perform an action in accordance with the word corresponding to the sentence and the wild card in the list (S105).

It is assumed, for example, that the inputted sentence means "the price is 10" and that the sentence meaning "the price is WD" is registered in the list. Further, it is also supposed that the sentence is related to the action of a character such that "reply, "the price is expensive" when WD is 5 or more, and "I will buy" when WD is less than 5".

In the above case, the entertainment apparatus 10 determines that the inputted sentence corresponds with the part of the sentence in the sentence list except the wild card. The entertainment apparatus 10 adds information that WD is 10 to the action related to the sentence "the price is WD", since the word of the inputted sentence that corresponds to the location of the wild card is "10", and then, the character would be made reply, "the price is high".

On the other hand, when there is no sentence included in the list, whose part other than the wild card corresponds with the inputted sentence, the inputted sentence is considered to be obscure, and non-correspondence process is carried out (S108).

In some cases, it is desirable that the character other than the player character has an opportunity to point out or correct an error of a sentence inputted by a player, depending on a scene. For example, when a player speaks to a character that does not exist in the scene, it is sometimes desirable that another character may reply, "such character does not exist", or may correct the inputted name of character, and then reply to the player.

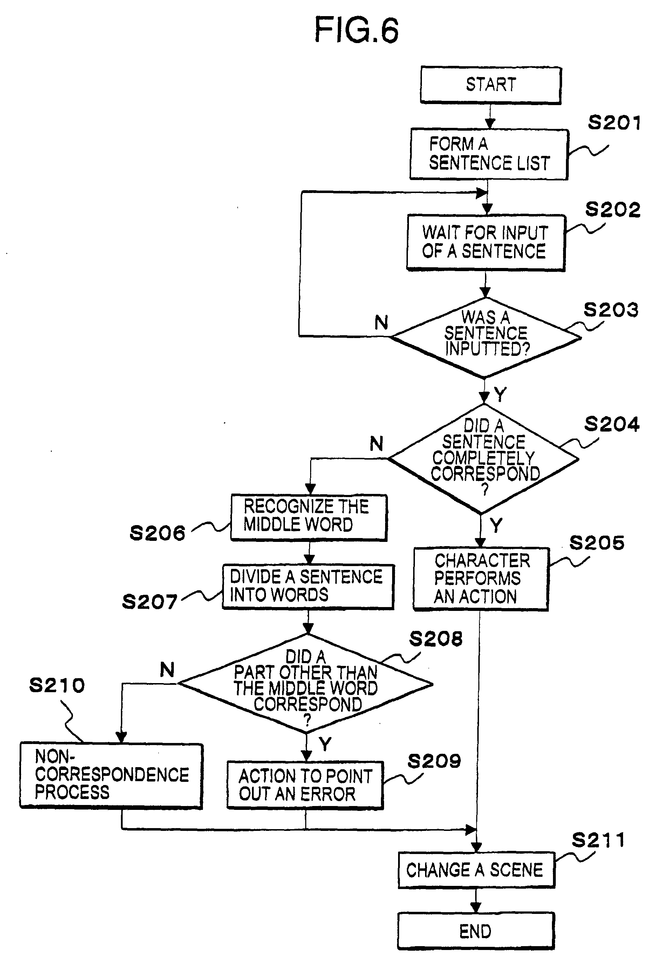

In this case, it is required to interpret the inputted sentence at the word level. In order to achieve this interpretation, the third processing way of interpreting the sentences is described, referring to a flow chart shown in Fig. 6. The case wherein an error of the "middle word" is recognized is exemplified here.

The entertainment apparatus 10 forms a sentence list, as with the first processing way, in accordance with the scene (S201), and waits for a player to input a sentence (S202). The sentences in the sentence list are related in advance to a response for the case where the sentence completely corresponds with a sentence in the list and a response to the case where the "middle word" is incorrectly used, for example, an action for pointing out an error of the language.

When a player inputs a sentence and there exists any sentence completely corresponding with the inputted sentence in the sentence list, the action related to the inputted sentence would be performed by a character (S205).

When there is no such sentence, it is checked whether the middle word is incorrectly used or not. The entertainment apparatus 10 extracts a middle word from the inputted sentence (S206). The inputted sentence can be divided into each of "front word", "middle word", and "rear word" (207) by recognizing the middle word, since the middle word is defined to comprise four syllables starting from "do-do". Similarly, the sentence in the list can be divided into words.

The sentence in which only the middle word is different is retrieved by referring to the inputted sentence and the sentences in the registered list, both of which are divided into words (S208). In the case there is a sentence in which only the middle word is different, a character is made to perform an action for pointing out the above error (S209). In the case such sentence is not found, the inputted sentence is considered to be obscure, and non-correspondence process is carried out (S210).

The foregoing is an example of making a player recognize an error of the "middle word". Retrieving a sentence in which only the "front word" or the "rear word" is different instead of the "middle word" in the step S208 can also make a player recognize an error of the "front word" or the "rear word".

The third processing way of interpreting sentences can be simplified. Some words cannot be used in a certain scene in view of a story. For example, it is neither possible to use the name of a character that does not exist in the scene nor to use the word such as "run" when a character is in a room.

Such disallowed words can be registered every scene together with related responses. It is possible to make a character perform an action related to the disallowed word, when there exists a disallowed word in the words divided in the step S207 in Fig. 6.

Retrieving disallowed words is possible without dividing sentences into words, and therefore it may be carried out before retrieving for complete sentence correspondence (S204). In this case, it is also possible to apply the disallowed words retrieving to the first and second processing ways.

As mentioned above, according to the present invention, a new communication means by which a player can have a free conversation with a character in a game to proceed with the game can be provided.

## Claims

1. A game controlling method for proceeding with a game by receiving an instruction from an operator and carrying out a processing content predetermined in correspondence with the instruction, wherein:
the instruction from the operator is performed in a language, which is formed by a combination of marks defined to correspond to input buttons and which is defined such that the combination of marks defines words and that an arrangement of the words expresses a certain meaning; and
the instruction from the operator is received through the input buttons corresponding to the marks.

2. A program which allows a program-executing apparatus provided with an input button to carry out a game by receiving an instruction from an operator and carrying out processing content predetermined in correspondence with the instruction,
wherein the program allows the program-executing apparatus carry out:
a process for receiving as the instruction from the operator in a language, which is formed by a combination of marks defined to correspond to input buttons and which is defined such that the combination of marks defines words and that an arrangement of the words expresses a certain meaning; and
a process for receiving the instruction from the operator through the input buttons corresponding to the marks.

3. A recording medium recording the program as claimed in Claim 2.

4. A recording medium recording a program and data, wherein the program carries out a communication support process for conveying an instruction externally inputted into a program-executing apparatus to a game program which allows the program-executing apparatus connectable to an operation unit to carry out a game, wherein,
the data comprises:
a plurality of marks which are formed by a combination of one or more mark elements whose number is preliminarily limited and which can be associated with an operation inherent to the operation unit;
information indicating an instruction content defined for each mark; and
a mark combination rule for specifying a manner of possible combination of the plural marks, and the program allows the information processing unit to carry out:
a process for, when the mark element is inputted from the operation apparatus, retrieving the data and extracting the data corresponding thereto;
a process for, with respect to a plurality of extracted marks, referring to the mark combination rule, determining whether a combination of the plurality of extracted data satisfies the mark combination rule, and when the combination satisfies the rule, informing the game program of information on the basis of an instruction specified by associating the mark with an instruction content.
